(19) **Europäisches Patentamt**

**European Patent Office**

**Office européen des brevets**

(11) Veröffentlichungsnummer: **0 221 193 B1**

(12) **EUROPÄISCHE PATENTSCHRIFT**

(45) Veröffentlichungstag der Patentschrift: **10.04.91**

(51) Int. Cl.⁵: **C12H 1/22**

(21) Anmeldenummer: **85113932.9**

(22) Anmeldetag: **01.11.85**

(54) **Schwimmkörper für den Oxidationsschutz von Flüssigkeiten.**

(43) Veröffentlichungstag der Anmeldung:
**13.05.87 Patentblatt 87/20**

(45) Bekanntmachung des Hinweises auf die
Patenterteilung:
**10.04.91 Patentblatt 91/15**

(84) Benannte Vertragsstaaten:
**AT BE CH DE FR GB IT LI LU NL SE**

(56) Entgegenhaltungen:
**EP-A- 0 017 650**
**DE-A- 2 657 270**
**FR-A- 776 352**
**FR-A- 1 014 259**
**FR-A- 1 412 243**

(73) Patentinhaber: **Schwab, Alfred**
**Bodenacker 7**
**CH-3065 Bolligen(CH)**

(72) Erfinder: **Jost, Robert**

**W-6761 Dreiweiherhof(DE)**
Erfinder: **Görtges, Siegmar, Dipl.-Ing.**
**Bergstrasse 42**
**W-6222 Geisenheim(DE)**

(74) Vertreter: **Weber, Dieter, Dr. et al**
**Dr. Dieter Weber und Dipl.-Phys. Klaus Seif-**
**fert Patentanwälte Gustav-Freytag-Strasse**
**25 Postfach 6145**
**W-6200 Wiesbaden 1(DE)**

Rank Xerox (UK) Business Services

## Beschreibung

Beim Aufbewahren von Getränken in unvollständig gefüllten Fässern, Tanks oder anderen Behältern tritt immer wieder das Problem oxidativer Veränderungen, insbesondere im Bereich der Oberfläche auf. Dies gilt insbesondere bei Wein, Fruchtwein oder Fruchtsäften.

Wein ist oxidationsempfindlich, so daß die Lagerung in vollen Behältnissen oder mit einer Inertgasüberschichtung erfolgen muß. Da die Behältergrößen mehr und mehr auf Standardmaße festgelegt werden, ist ein Vollhalten von Weinbehältern, wie Fässern oder Tanks, oft nicht möglich.

Eine Methode zur Vermeidung oxidativer Veränderungen des Weines bei teilgefüllten Behältnissen besteht darin, den Wein in dem Behältnis mit einem Inertgas, wie Stickstoff und/oder Argon, zu überlagern. Die Überlagerung ist umständlich, da sie nur bei vorheriger Verdrängung der Luftatmosphäre möglich ist. Eine Überschichtung mit CO2 ist nur bei Drucktanks möglich und führt zu organoleptischen Veränderungen.

Eine andere bekannte Methode der Überlagerung besteht darin, auf der Flüssigkeitsoberfläche schwimmfähige Platten zu halten, die die Flüssigkeitsoberfläche im wesentlichen zum Gasraum hin abdichten. Der Oxidationsschutz ist in diesem Fall nur unvollständig, und die Anwendung solcher Schwimmböden setzt spezielle Behälterkonstruktionen voraus. Außerdem ergeben sich Probleme bei der anschließenden Behälterreingung und -desinfektion.

Die FR-A-776 352 beschreibt einen Schwimmkörper für den oxidationsschutz, der ringsum dichtend an der Innenwandung des Flüssigkeitsbehälters anliegt und der einen Einsatz aufweist, in dem durch Verbrennung einer schwefelhaltigen Substanz SO2 entwickelt und durch Öffnungen des Schwimmkörpers an den Luftraum unterhalb der ringsumlaufenden Dichtlippe abgegeben wird.

Aus der FR-A-1 412 243 ist es außerdem bekannt, alkoholische Getränke durch Auflösen von Ascorbinsäure und Metabisulfit darin unter SO2-Bildung zu konservieren.

Die der Erfindung zugrundeliegende Aufgabe bestand nun darin, ein gut wirksames und einfaches Verfahren zum Oxidationsschutz von Flüssigkeiten, insbesondere von Wein, Fruchtwein oder Fruchtsaft, gegenüber dem die Flüssigkeit überlagernden Gasraum zu bekommen. Diese Aufgabe wird erfindungsgemäß mit dem nachfolgend definierten Schwimmkörper gelöst.

Der erfindungsgemäße Schwimmkörper für den Oxidationsschutz von Flüssigkeiten, insbesondere von Wein, Fruchtwein oder Fruchtsaft, besitzt die in den Patentansprüchen angegebenen Merkmale.

Bei Einwirkung einer feuchten Atmosphäre auf die Mischung von Salz und Säure oder besser bei Zugabe von Wasser in den Schwimmkörper zersetzt sich das Salz unter Abgabe von SO2 und Bildung des Salzes der organischen Säure mit dem entsprechenden Kation. Das gebildete SO2 tritt aus der oder den Gasaustrittsöffnungen im oberen Bereich des Schwimmkörpers aus und bildet über der Flüssigkeitsoberfläche eine Schutzatmosphäre unter Verdrängung von Luft und Sauerstoff, so daß der Sauerstoff keinen Zutritt zu der Flüssigkeit hat und keine oxidativen Veränderungen hervorrufen kann. Je nach der Feuchtigkeitsmenge; die Zutritt zu der Mischung von organischer Säure und SO2 abgebendem Salz hat, wird das SO2 schneller oder langsamer abgegeben. In jedem Fall aber er folgt die Abgabe so langsam, daß der Schwimmkörper ohne Hast auf die Flüssigkeitsoberfläche aufgesetzt und der Behälter verschlossen werden kann. Danach bildet, sich dann in dem verschlossenen Behälter nach und nach die SO2-Schutzgasatmosphäre über der Flüssigkeitsoberfläche aus. Der hierdurch bedingt Oxidationsschutz reicht für übliche Lagerzeiten bis zum Verbrauch der Flüssigkeit aus.

Selbstverständlich kann die Mischung von organischer Säure und Salz auch getrennt von dem Hohlkörper in den Handel gebracht werden, und zwar entweder als Nachfüllpackung oder auch zur Erstbefüllung.

Bei der verwendeten organischen Säure muß es sich um eine solche handeln, die mit dem SO2 abgebenden Salz unter Freisetzung von SO2 und Bildung des entsprechenden Salzes der organischen Säure reagiert. Das heißt, die organische Säure muß eine stärkere Säure als die des SO2 abgebenden Salzes sein oder anderweitig zu einer SO2 freisetzenden Reaktion in dem Salz führen.

Wenn der Oxidationsschutz auf Genußmittel, wie Wein, Fruchtwein oder Fruchtsaft, ausgeübt werden soll, ist es zweckmäßig, als Säure eine Genußsäure, wie Weinsäure, Ascorbinsäure, Zitronensäure oder Essigsäure zu verwenden. Zweckmäßig wird eine feste organische Säure eingesetzt, da diese im Gemisch mit dem Salz leichter zu handhaben ist. Die Säure muß mit dem Genußmittel verträglich sein. Aus diesem Grund sind Weinsäure und Ascorbinsäure besonders bevorzugt.

Unter den SO2 abgebenden Salzen sind insbesondere die Alkalidisulfite, besonders Kaliumdisulfit, zu nennen.

Bei feuchter Atmosphäre oder besonders bei Zugabe von Wasser in den Schwimmkörper spielt sich bei Verwendung von Kaliumdisulfit und Weinsäure folgende Reaktion ab:

$$25\ K_2S_2O_5 + 2\ HOOC\text{-}COH\text{-}COH\text{-}COOH + 2\ SO_2 + H_2O + 2\ KOOC\text{-}COH\text{-}COH\text{-}COOH$$

Als Richtgröße läßt sich sagen, daß für ein Luftvolumen von ca. 50 1 etwa 2 bis 4g salzmischung und 8 bis 15ml wasser erforderlich sind. Die Größe des Schwimmkörpers wird so bemessen, daß er bei Vorgabe einer bestimmten Menge der Salzmischung die erforderliche Wassermenge aufnehmen kann und dann noch genügend Raum hat, damit die entstehende Salzlösung nicht leicht aus den Gasaustrittsöffnungen in die Flüssigkeit übertritt. Gewöhnlich wird das Volumen des Schwimmkörpers so bemessen, daß nach Einfüllen der erforderlichen Wassermenge der Schwimmkörper zur Hälfte oder zu zwei Dritteln gefüllt ist.

An sich ist für das Mischungsverhältnis von organischer Säure und Salz kein zwingender Wert vorgeschrieben. Da es aber zweckmäßig ist, daß möglichst die theoretische Menge an $SO_2$ abgegeben wird, sollten die organische Säure und das $SO_2$ abgebende Salz in etwa stöchiometrischen Mengen in dem Schwimmkörper vorliegen. Vorzugsweise sollte die Säure in einem geringen stöchiometrischen Überschuß enthalten sein.

Das Gemisch aus organischer Säure und $SO_2$ abgebendem Salz kann in Pulverform vorliegen. Zweckmäßig ist es aber für die Handhabung, dieses Gemisch in Form von Preßlingen vorliegen zu haben, wie in Form von Tabletten, so daß bei der Erstbefüllung oder beim Nachfüllen des Schwimmkörpers nur eine oder zwei Tabletten eingelegt werden müssen, was ein Abmessen oder andere umständliche Tätigkeiten für den Benutzer unnötig macht.

Wie erwähnt, kann der Hohlkörper immer wieder für den beabsichtigten Zweck eingesetzt werden, indem das Gemisch von organischer Säure und $SO_2$ abgebendem Salz nachgefüllt wird. Hierzu ist es zweckmäßig, den Hohlkörper mit einem Deckel zu versehen, der die Gasaustrittsöffnungen enthalten kann und den Hohlkörper bei der Verwendung normalerweise verschließt, zum Nachfüllen aber abgenommen werden kann.

Der Hohlkörper als solcher kann aus unterschiedlichen Materialien bestehen, muß aber selbstverständlich schwimmfähig sein. Zweckmäßig besteht der Hohlkörper aus Kunststoff und ist im unteren Bereich durch einen enthaltenen Metallkörper beschwert.

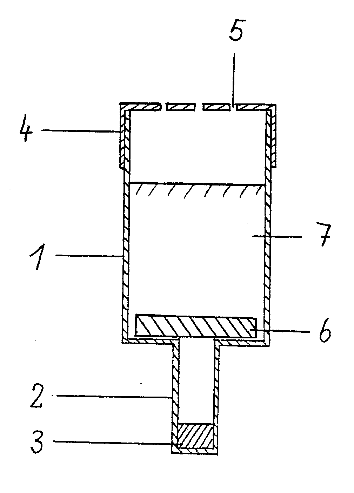

In der Zeichnung ist eine Ausführungsform eines Schwimmkörpers nach der Erfindung dargestellt. Dieser Schwimmkörper besteht aus einem zylinderförmigen Kunststoffhohlkörper 1 mit einem hohlen, am unteren Ende verschlossenen Zapfen 2, in welchem sich am unteren Ende zur Beschwerung ein Metallkörper 3 befindet. Am oberen Ende ist der Hohlkörper 1 mit einem aufgepaßten Kunststoffdeckel 4 mit Gasaustrittsöffnungen 5 verschlossen.

Am Boden des Hohlkörpers liegt eine Tablette 6 aus einem Gemisch der organischen Säure und eines $SO_2$ abgebenden Salzes. Diese Tablette ist von einer Wasserschicht 7 überlagert.

## Beispiel

In 25 1-Korbflaschen mit jeweils 10 1 Jungwein wurde je ein Schwimmkörper nach der Erfindung mit einem Gehalt von 1 g Kaliumdisulfit und 1 g Weinsäure sowie 7 ml Wasser eingelegt. Zu Versuchsbeginn hatte der Jungwein einen $SO_2$-Gehalt von 7 mg freiem SO2 und 18 mg Gesamt-$SO_2$.

Über einen Zeitraum von einem halben Jahr wurden $SO_2$-Messungen an der Flüssigkeitsoberfläche sowie am Flüssigkeitsboden durchgeführt. Die Untersuchungen ergaben, daß praktisch keine Veränderungen des freien $SO_2$-Gehaltes im Beobachtungszeitraum auftrat. Der Wein blieb hell. Oxidation und Kahmhefewachstum waren nicht feststellbar.

## Ansprüche

1. Schwimmkörper für den Oxidationsschutz von Flüssigkeiten, insbesondere von Wein, Fruchtwein oder Fruchtsaft, bestehend aus einem im oberen Bereich mit wenigstens einer Gasaustrittsöffnung versehenen Hohlkörper, der eine $SO_2$ abgebende Substanz enthält, **dadurch gekennzeichnet,** daß der Hohlkörper im unteren Bereich beschwert ist und die $SO_2$ abgebende Substanz je 50 1 Luftvolumen über der zu schützenden Flüssigkeit aus einer Mischung von 2 bis 4 g von $SO_2$ abgebendem Salz und einer wasserlöslichen organischen Säure besteht, wobei das Volumen des Hohlkörpers so bemessen ist, daß nach Einfüllen der für die $SO_2$-Bildung erforderlichen Wassermenge der Hohlkörper zur Hälfte bis zu zwei Dritteln gefüllt ist.

2. Schwimmkörper nach Anspruch 1, dadurch gekennzeichnet, daß er als organische Säure Weinsäure, Ascorbinsäure oder Zitronensäure enthält.

3. Schwimmkörper nach einem der Ansprüche 1 und 2, dadurch gekennzeichnet, daß er als $SO_2$ abgebendes Salz Alkalidisulfit, besonders Kaliumdisulfit enthält.

4. Schwimmkörper nach einem der Ansprüche 1 bis 3, dadurch gekennzeichnet, daß er die organische Säure und das $SO_2$ abgebende Salz in etwa stöchiometrischen Mengen, vorzugsweise mit einem geringen Säureüberschuß enthält.

5. Schwimmkörper nach einem der Ansprüche 1 bis 4, dadurch gekennzeichnet, daß er das Gemisch der organischen Säure und des $SO_2$ abgebenden Salzes in der Form wenigstens eines Preßlings enthält.

6. Schwimmkörper nach einem der Ansprüche 1 bis 5, **dadurch gekennzeichnet,** daß er aus Kunststoff besteht und mit Hilfe eines im unteren Bereich enthaltenen Metallkörpers beschwert ist.

7. Schwimmkörper nach einem der Ansprüche 1 bis 6, **dadurch gekennzeichnet,** daß er mit einem abnehmbaren Deckel versehen ist.

## Claims

1. Float for the oxidation protection of liquids, particularly wine, fruit wine or fruit juice, comprising a hollow article provided in its upper area with at least one gas outlet and containing a $SO_2$-releasing substance, characterized in that the lower area of the hollow article is made heavier and, per 50 litre air volume over the liquid to be protected, the $SO_2$-releasing substance comprises a mixture of 2 to 4 g of $SO_2$-releasing salt and a soluble organic acid, the hollow article volume being dimensioned in such a way that after filling the water quantity necessary for $SO_2$ formation, the hollow article is $1/2$ to $2/3$ full.

2. Float according to claim 1, characterized in that it contains tartaric, ascorbic or citric acid as the organic acid.

3. Float according to one of the claims 1 and 2, characterized in that it contains alkali metal disulphite, particularly potassium disulphite as the $SO_2$-releasing salt.

4. Float according to one of the claims 1 to 3, characterized in that it contains the organic acid and the $SO_2$-releasing salt in roughly stoichiometric quantities and preferably with a slight acid excess.

5. Float according to one of the claims 1 to 4, characterized in that it contains the mixture of the organic acid and the $SO_2$-releasing salt in the form of at least one pressed article.

6. Float according to one of the claims 1 to 5, characterized in that it is made from plastic and is made heavier by a metal body in the lower area.

7. Float according to one of the claims 1 to 6, characterized in that it is provided with a removable lid.

## Revendications

1. Flotteur destiné à la protection, contre l'oxydation, de liquides, en particulier de vin, de vin de fruit ou de jus de fruit, comprenant un corps creux, pourvu dans la zone supérieure d'au moins un orifice de sortie de gaz, qui contient des substances dégageant du $SO_2$, caractérisé en ce que le corps creux est chargé dans la zone inférieure et que la substance dégageant du $SO_2$ se compose, par volume de 50 1 d'air situé au-dessus du liquide à protéger, d'un mélange d'un sel dégageant 2 à 4 g de $SO_2$, et d'un acide organique soluble dans l'eau, le volume du corps creux étant dimensionné de telle façon que, après le remplissage de la quantité d'eau nécessaire pour le dégagement de $SO_2$, le corps creux est rempli de la- moitié jusqu' aux deux tiers.

2. Flotteur selon la revendication 1, caractérisé en ce qu'il contient comme acide organique de l'acide tartrique, de l'acide ascorbique ou de l'acide citrique.

3. Flotteur selon l'une des revendications 1 et 2, caractérisé en ce qu'il contient, comme sel dégageant du $SO_2$ un bisulfite alcalin, et en particulier un bisulfite de potassium.

4. Flotteur selon l'une des revendications 1 à 3, caractérisé en ce qu'il contient 1'acide organique et le sel dégageant du $SO_2$ dans des proportions à peu prés stoechimétriques, de préférence avec un léger excès d'acide.

5. Flotteur selon l'une des revendications 1 à 4, caractérisé en ce qu'il contient le mélange de l'acide organique et du sel dégageant du $SO_2$ sous la forme d'au moins un comprimé.

6. Flotteur selon l'une des revendications 1 à 5, caractérisé en ce qu'il est en matière plastique et est chargé à l'aide d'un corps métallique contenu dans la zone inférieure.

7. Flotteur selon l'une des revendications 1 à 6, caractérisé en ce qu'il comporte un couvercle amovible.